# EUROPEAN PATENT APPLICATION

(11) **EP 4 358 275 A1**
(43) Date of publication of application: **24.04.2024**
(21) Application number: 22829537.4
(22) Date of filing: 31.10.2022
(51) Int. Cl.: H01M 50/502

(54) **CURRENT COLLECTOR, BATTERY COVER, AND BATTERY STRUCTURE**

(30) Priority: 09.09.2022 CN 202222404648 U
(71) Applicant: Eve Power Co., Ltd., Jingmen, Hubei 448000 (CN)
(72) Inventor: ZHAO, Fenfen, Jingmen Hubei 448000 (CN); MIN, Changfei, Jingmen Hubei 448000 (CN); LU, Haixu, Jingmen Hubei 448000 (CN); ZHANG, Lei, Jingmen Hubei 448000 (CN); ZHAO, He, Jingmen Hubei 448000 (CN); HUANG, Liming, Jingmen Hubei 448000 (CN)
(74) Representative: Herrero & Asociados, S.L.
(86) International application number: PCT/CN2022/128594
(87) International publication number: WO 2024/050944

(57) **Abstract**

A current collector, a battery cover plate, and a battery structure are provided. The current collector includes a first connection portion and a second connection portion. The first connection portion is connected to an electrode post holder, and the first connection portion and the second connection portion are connected through a bending-resistant portion. The battery cover plate includes the above current collector, an electrode post, and a top cover plate. The electrode post body penetrates the top cover plate to be connected to a terminal. The terminal and the current collector are disposed on opposite sides of the top cover plate, and the first connection portion of the current collector is connected to the electrode post.

## Description

The present application claims priority of Chinese Patent Application No. 202222404648.8, filed on September 09, 2022, in the China National Intellectual Property Administration, the entire contents of which are hereby incorporated by reference in their entireties.

### TECHNICAL FIELD

The present disclosure relates to the field of battery technologies, and in particular to a current collector, a battery cover plate, and a battery structure.

### BACKGROUND

In the relevant cylindrical battery electrical connection technologies, the current collector is adopted with the form of metal sheet, with an end connected to a winding core, the other end fixed with a cover plate assembly, and the middle portion in the form of different shapes of the overall metal sheet. During the bending process of the current collector, the bending position is prone to stress concentration, resulting in the fracture of the current collector. In the actual use of the finished battery, there will be excessive vibration amplitude and frequency that will lead to the fracture of the current collector, which will directly cause breakage of the battery's internal circuit.

### SUMMARY OF THE DISCLOSURE

The present disclosure provides a current collector, a battery cover, and a battery structure, which improves the bending resistance of the current collector by arranging a bending-resistant portion in the current collector on the basis of ensuring the current-passing capability.

In a first aspect, the present disclosure provides a current collector, including a first connection portion, a bending-resistant portion, and a second connection portion; wherein the first connection portion and the second connection portion are connected through the bending-resistant portion.

In some embodiments, the bending-resistant portion is a plurality of metal wires evenly distributed; a first end of each metal wire is connected to the first connection portion, and a second end of each metal wire is connected to the second connection portion.

In some embodiments, the bend-resistant portion is a bendable metal wavy plate; a first end of the metal wavy plate is connected to the first connection portion, and a second end of the metal wavy plate is connected to the second connection portion.

In some embodiments, peaks and valleys on the metal wavy plate are alternately arranged from the first connection portion to the second connection portion.

In some embodiments, an outer side of the bending-resistant portion is covered with an insulating layer.

In some embodiments, the first connection portion and the second connection portion are metal sheets with smooth surfaces.

In a second aspect, the present disclosure provides a battery cover plate, including:
the current collector as above;
an electrode post, including an electrode post holder and an electrode post body;
a top cover plate, defining a top cover through hole; and
a terminal; wherein the electrode post body is connected to the terminal through the top cover through hole; the terminal is disposed on a side of the top cover plate; and the current collector is disposed on another side, opposite to the side, of the top cover plate;
wherein the first connection portion of the current collector is connected to the electrode post holder.

In some embodiments, the top cover plate includes a recessed portion, an upper plastic is arranged in the recessed portion, and the upper plastic defines an upper plastic hole communicated with the top cover through hole; the electrode post body penetrates the upper plastic hole to be connected to the terminal; the upper plastic is arranged with a plastic protrusion abutting against the terminal.

In some embodiments, the upper plastic is circumferentially arranged with a plastic raised portion along an outer end of the upper plastic, and an inner wall of the plastic raised portion abuts against a circumferential outer wall of the terminal.

In some embodiments, the battery cover plate further includes: a lower plastic, arranged between the top cover plate and the current collector; wherein the lower plastic defines a lower plastic hole, and the electrode post body is connected to the terminal through the lower plastic hole.

In some embodiments, the battery cover plate further includes: a sealing ring, sleeved on and connected to the electrode post body; wherein the sealing ring includes a ring body and a protruding portion perpendicular to the ring body; the protruding portion is arranged in the top cover through hole, arranged between the electrode post body and the top cover through hole, and held by the electrode post body and a side wall of the top cover through hole; the ring body is arranged between the electrode post holder and a bottom surface of the top cover plate and is held by the electrode post holder and the top cover plate.

In a third aspect, the present disclosure provides a battery structure, including the battery cover plate as above.

Beneficial effect of the present disclosure.

On the basis of ensuring the current-passing capacity, by arranging the bending-resistant portion in the current collector, the bending portion may not be damaged due to a concentrated stress of the current collector when bending, thereby improving the bending resistance of the current collector, increasing the bending toughness of the bending portion, preventing the current collector from breaking during the use of the battery, and thus enhancing the stability of the battery during use.

### BRIEF DESCRIPTION OF THE DRAWINGS

FIG. 1 is a structural schematic view of a current collector in which a bending portion is a metal wire according to an embodiment of the present disclosure.
FIG. 2 is a structural schematic view of a current collector in which a bending portion is a metal wavy plate according to an embodiment of the present disclosure.
FIG. 3 is an exploded schematic view of a battery cover plate according to an embodiment of the present disclosure.
FIG. 4 is a cross-sectional schematic view of a battery cover plate according to an embodiment of the present disclosure.

Reference numerals:

1-terminal; 2-electrode post; 21-electrode post body; 22-electrode post holder; 3-upper plastic; 31-upper plastic hole; 32-plastic protrusion; 33-plastic raised portion; 4-sealing ring; 41-protruding portion; 42-ring body; 5-top cover plate; 51-top cover through hole; 52-recessed portion; 6-lower plastic; 61-lower plastic hole; 62-passage port; 7-current collector; 71-first connection portion 72-bending-resistant portion; 73-second connection portion.

### DETAILED DESCRIPTION

In the description of the present disclosure, unless otherwise specified and limited, the terms "coupled", "connected", "fixed" are to be understood in a broad sense, for example, as a fixed connection, as a removable connection, or as a one-piece unit; as a mechanical connection or as an electrical connection; as a direct connection or as an indirect connection through an intermediate medium; as an internal connection of two components or an interaction of two components. To those skilled in the art, the meaning of the above terms in the context of the present disclosure may be understood in accordance with the circumstances.

In the present disclosure, unless otherwise expressly specified and limited, a first feature "on" or "under" a second feature may include direct contact between the first and second features, or it may include contact between the first and second features not directly, but through a separate feature between them. Also, the first feature being "above", "on" and "on top of" the second feature includes the first feature being directly above and diagonally above the second feature, or simply indicating that the first feature is horizontally higher than the second feature. The first feature being "below", "under" and "on bottom of" the second feature includes the first feature being directly below and diagonally below the second feature, or simply indicating that the first feature is horizontally lower than the second feature.

In the description herein, the terms "up", "down", "left", "right", and other orientation or positional relationships are based on the orientation or positional relationships shown in the accompanying drawings and are intended only to facilitate description and simplify operation, not to indicate or imply that the device or element referred to must have a particular orientation, be constructed and operate in a particular orientation, and therefore are not to be construed as limiting the present disclosure. In addition, the terms "first" and "second" are used only for descriptive distinction and have no special meaning.

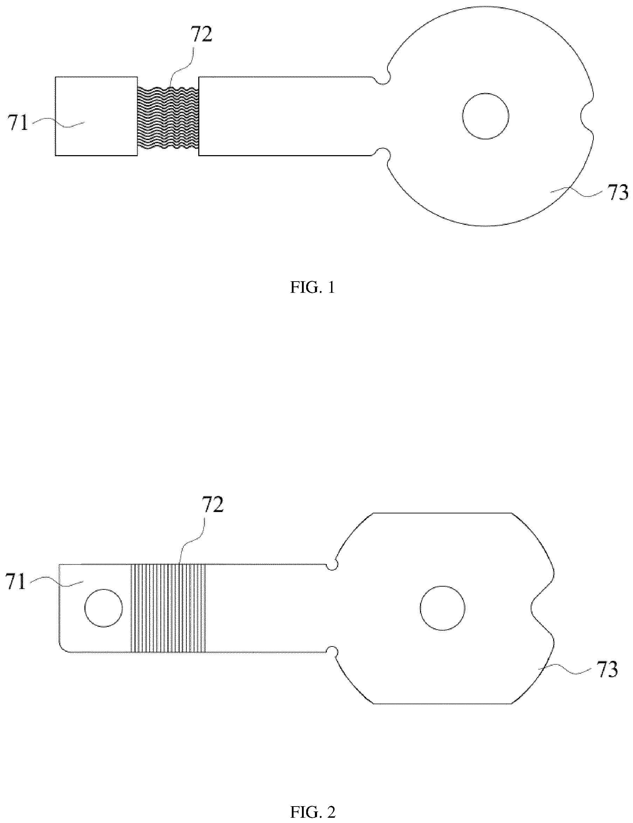

As shown in FIGS. 1-2, embodiments of the present disclosure provide a current collector, and the current collector 7 includes a first connection portion 71, a bending-resistant portion 72, and a second connection portion 73. The first connection portion 71 and the second connection portion 73 are connected through the bending-resistant portion 72.

On the basis of ensuring the current-passing capacity, by arranging the bending-resistant portion 72 in the current collector, the bending portion 72 may not be damaged due to a concentrated stress of the current collector 7 when bending, thereby improving the bending resistance of the current collector 7, increasing the bending toughness of the bending portion 72, preventing the current collector 7 from breaking during the use of the battery, and thus enhancing the stability of the battery during use.

The following is a detailed description of the embodiments, as shown in FIGS. 1 and 2, the current collector 7 includes a bendable portion. Exemplarily, the current collector 7 includes a first connection portion 71 and a second connection portion 73. In some embodiments, the first connection portion 71 and the second connection portion 73 are metal sheets with smooth surfaces. The flat structure of the sheet may increase the welding joints during welding and enhance the current-passing capability. In some embodiments, the first connection portion 71 and the second connection portion 73 may be made of aluminum or copper and other metal materials. The first connection portion 71 and the second connection portion 73 are connected through the bending-resistant portion 72. An outer side of the bending-resistant portion 72 is covered with an insulating layer, which may relieve the bending fatigue of the bending-resistant portion 72. The insulating layer may be made of PTE, PA, and other insulating plastic.

As shown in FIG. 1, in some embodiments, the bending-resistant portion 72 is multiple metal wires evenly distributed, and the metal wires are made of metal materials such as aluminum or copper. A first end of each metal wire is connected to the first connection portion 71, and a second end of the metal wire is connected to the second connection portion 73. The metal wires are evenly distributed between the first connection portion 71 and the second connection portion 73 to connect the first connection portion 71 and the second connection portion 73, such that the subjected force is uniform when bending; in addition, a stress concentration in the bending portion may be avoided when bending, thereby increasing the bending capacity of the current collector 7. The bending-resistant portion 72 may be integrally formed with the first connection portion 71 and the second connection portion 73, i.e., aluminum or copper may be integrally formed into the current collector 7, and then cut into multiple wires at the bending portion to reduce processes of connecting the bending-resistant portion 72 with the first connection portion 71 and the second connection portion 73, such that the bending-resistant portion 72 is not easy to break at connection ends.

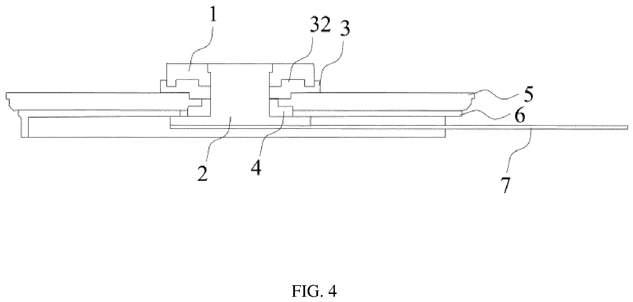

As shown in FIG. 2, in other embodiments, as shown in FIG. 4, the bend-resistant portion 72 is a bendable metal wavy plate, and a first end of the metal wavy plate is connected to the first connection portion 71 and a second end of the metal wavy plate is connected to the second connection portion 73. Exemplarily, peaks and valleys on the metal wavy plate are alternately arranged from the first connection portion 71 to the second connection portion 73, such that the bend-resistant portion 72 can be easily bent to avoid breaking. The length of the metal wavy plate is 1/3 to 1/2 of the length D of the current collector 7, (where: the length of the metal wavy plate refers to the distance from a connection point of the metal wavy plate with the first connection section 71 to a connection point with the second connection section 73). In some embodiments, the metal wavy plate, the first connection portion 71, and the second connection portion 73 are integrally formed, and the metal wavy plate may be formed by pressing, thereby reducing processes of connecting the bending-resistant portion 72 with the first connection portion 71 and the second connection portion 73, such that the bending-resistant portion 72 is not easy to break at connection ends.

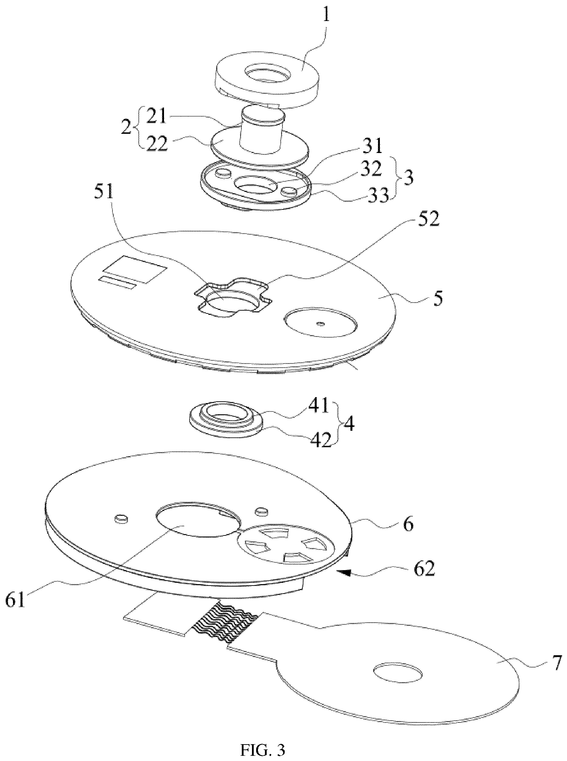

As shown in FIGS. 3 and 4, embodiments of the present disclosure further provide a battery cover plate, the battery cover plate includes the above-mentioned current collector 7, an electrode post 2, and a top cover plate 5. The electrode post 2 includes an electrode post holder 22 and an electrode post body 21. The top cover plate 5 defines a top cover through hole 51; the electrode post body 21 is connected to a terminal 1 through the top cover through hole 51.

In some embodiments, the battery cover plate further includes a sealing ring 4, which is sleeved on and connected to the electrode post body 21. The sealing ring 4 includes a ring body 42 and a protruding portion 41 perpendicular to the ring body 42. The protruding portion 41 is arranged in the top cover through hole 51, arranged between the electrode post body 21 and the top cover through hole 51, and held by the electrode post body 21 and a side wall of the top cover through hole 51, thereby effectively realizing isolation and sealing between the electrode post body 21 and the top cover plate 5. The ring body 42 is arranged between the electrode post holder 22 and a bottom surface of the top cover plate 5 and is held by the electrode post holder 22 and the top cover plate 5, thereby effectively realizing isolation and sealing between the electrode post holder 22 and the top cover plate 5. In some embodiments, the sealing ring 4 is made of a resilient rubber material.

Exemplarily, the top cover plate 5 includes a recessed portion 52, the recessed portion 52 is arranged with an upper plastic 3, and the upper plastic 3 defines an upper plastic hole 31 coaxial with the top cover through hole 51. The electrode post body 21 penetrates the upper plastic hole 31 to be connected to the terminal 1. The upper plastic 3 in the recessed portion 52 may increase the seal of the electrode post body 21 through the top cover through hole 51, such that the top cover plate 5 and the terminal 1 are combined more closely. The upper plastic 3 is arranged with a plastic protrusion 32, which abuts against the terminal 1 to prevent the terminal 1 from shaking with respect to the top cover plate 5. Exemplarily, the upper plastic 3 is circumferentially arranged with a plastic raised portion 33 along an outer end of the upper plastic 3, and an inner wall of the plastic raised portion 33 abuts against a circumferential outer wall of the terminal 1. The plastic raised portion 33 enclosing the outer circumferential wall of the terminal 1 may avoid the risk of contact between the terminal 1 and the top cover plate 5.

In some embodiments, the battery cover plate further includes a lower plastic 6, which is arranged under the top cover plate 5, and the lower plastic 6 defines a lower plastic hole 61. The electrode post body 21 is connected to the terminal 1 through the lower plastic hole 61. The current collector 7 and the terminal 1 are disposed on opposite sides of the top cover plate 5, respectively, and the current collector 7 is disposed under the lower plastic 6. The first connection portion 71 of the current collector 7 is connected to the electrode post holder 22. In some embodiments, the lower plastic 6 further defines a passage port 62 on a side wall of the lower plastic 6 for the current collector 7 to pass through, and the second connection portion 73 can pass through the passage port 62 to be connected to a winding core in subsequent processes.

Embodiments of the present disclosure further provide a battery structure, including the above-mentioned battery cover plate, in order to enhance the bending resistance at the bending portion of the current collector 7 on the basis of ensuring the current-passing capability, thereby enhancing the stability of the battery during use.

## Claims

1. A current collector, comprising a first connection portion (71), a bending-resistant portion (72), and a second connection portion (73); wherein the first connection portion (71) and the second connection portion (73) are connected through the bending-resistant portion (72).

2. The current collector according to claim 1, wherein the bending-resistant portion (72) is a plurality of metal wires evenly distributed; a first end of each metal wire is connected to the first connection portion (71), and a second end of each metal wire is connected to the second connection portion (73).

3. The current collector according to claim 1, wherein the bend-resistant portion (72) is a bendable metal wavy plate; a first end of the metal wavy plate is connected to the first connection portion (71), and a second end of the metal wavy plate is connected to the second connection portion (73).

4. The current collector according to claim 3, wherein peaks and valleys on the metal wavy plate are alternately arranged from the first connection portion (71) to the second connection portion (73).

5. The current collector according to claim 1, wherein an outer side of the bending-resistant portion (72) is covered with an insulating layer.

6. The current collector according to claim 1, wherein the first connection portion (71) and the second connection portion (73) are metal sheets with smooth surfaces.

7. A battery cover plate, comprising:
the current collector according to any one of claims 1-6;
an electrode post (2), comprising an electrode post holder (22) and an electrode post body (21);
a top cover plate (5), defining a top cover through hole (51); and
a terminal (1); wherein the electrode post body (21) is connected to the terminal (1) through the top cover through hole (51); the terminal (1) is disposed on a side of the top cover plate (5), and the current collector (7) is disposed on another side, opposite to the side, of the top cover plate (5);
wherein the first connection portion (71) of the current collector (7) is connected to the electrode post holder (22).

8. The battery cover plate according to claim 7, wherein the top cover plate (5) comprises a recessed portion (52), an upper plastic (3) is arranged in the recessed portion (52), and the upper plastic (3) defines an upper plastic hole (31) communicated with the top cover through hole (51); the electrode post body (21) penetrates the upper plastic hole (31) to be connected to the terminal (1); the upper plastic (3) is arranged with a plastic protrusion (32) abutting against the terminal (1).

9. The battery cover plate according to claim 8, wherein the upper plastic (3) is circumferentially arranged with a plastic raised portion (33) along an outer end of the upper plastic (3), and an inner wall of the plastic raised portion (33) abuts against a circumferential outer wall of the terminal (1).

10. The battery cover plate according to claim 7, further comprising: a lower plastic (6), arranged between the top cover plate (5) and the current collector (7); wherein the lower plastic (6) defines a lower plastic hole (61), and the electrode post body (21) is connected to the terminal (1) through the lower plastic hole (61).

11. The battery cover plate according to claim 7, further comprising: a sealing ring (4), sleeved on and connected to the electrode post body (21); wherein the sealing ring (4) comprises a ring body (42) and a protruding portion (41) perpendicular to the ring body (42); the protruding portion (41) is arranged in the top cover through hole (51), arranged between the electrode post body (21) and the top cover through hole (51), and held by the electrode post body (21) and a side wall of the top cover through hole (51); the ring body (42) is arranged between the electrode post holder (22) and a bottom surface of the top cover plate (5) and is held by the electrode post holder (22) and the top cover plate (5).

12. A battery structure, comprising the battery cover plate according to any one of claims 7-11.
